Europäisches Patentamt

European Patent Office

Office européen des brevets

(11) Numéro de publication: **0 245 565 B1**

# (12) FASCICULE DE BREVET EUROPEEN

(45) Date de publication de fascicule du brevet:
13.03.91

(51) Int. Cl.⁵: **F42B 10/66, F42B 12/10**

(21) Numéro de dépôt: 86401004.6

(22) Date de dépôt: **12.05.86**

(54) **Procédé de pilotage d'un missile à faible vitesse, système d'arme et missile pour la mise en oeuvre du procédé.**

(43) Date de publication de la demande:
**19.11.87 Bulletin 87/47**

(45) Mention de la délivrance du brevet:
**13.03.91 Bulletin 91/11**

(84) Etats contractants désignés:
**CH LI SE**

(56) Documents cités:
| | |
|---|---|
| DE-B- 1 147 144 | FR-A- 1 194 102 |
| FR-A- 1 569 559 | FR-A- 2 386 802 |
| FR-A- 2 492 966 | GB-A- 1 185 193 |
| US-A- 2 503 271 | US-A- 4 519 315 |

(73) Titulaire: **AEROSPATIALE Société Nationale Industrielle**
**37, Boulevard de Montmorency**
**F-75781 Paris Cédex 16(FR)**

(72) Inventeur: **Guillot, Jean**
**74 avenue des Quatre Chemins**
**F-92290 Chatenay-Malabry(FR)**
Inventeur: **Marée, Michel**
**84 rue de la Gruerie**
**F-91190 Gif-sur-Yvette(FR)**
Inventeur: **Raynaud, Jacques**
**64 rue René Legros**
**F-91600 Savigny-sur-Orge(FR)**
Inventeur: **Vaillant, Robert**
**90, Avenue du Maine**
**F-75007 Paris(FR)**
Inventeur: **Ansaldi, Jean**
**19, rue de la Peupleraie Résidence la Peupleraie**
**F-78470 St.Remy-les-Chevreuses(FR)**

(74) Mandataire: **Bonnetat, Christian et al**
**CABINET BONNETAT 23, Rue de Léningrad**
**F-75008 Paris(FR)**

## Description

La présente invention concerne un missile et un système d'arme comportant un tel missile. elle s'applique tout particulièrement aux systèmes d'arme d'infanterie du type "fardeau", c'est-à-dire portable et pouvant être mis en oeuvre par un seul homme. Les missiles correspondants sont destinés à la neutralisation d'objectifs terrestres blindés, mobiles ou non, en particulier des chars. Les charges utiles à emporter par les projectiles sont essentiellement constituées par des charges militaires. Ces charges, qui doivent être efficaces contre les blindages nouveaux, ont des masses et des calibres importants. Les systèmes d'arme concernés doivent être capables du tir à partir d'espaces confinés (abris, caves, immeubles, etc...) avec portée minimale très faible de quelques dizaines de mètres, tandis que, selon diverses variantes de réalisation, les portées maximales peuvent être choisies de quelques 6 à 700 mètres jusqu'à environ 2000 mètres.

L'emploi des armes d'infanterie antichar au-delà de 300 mètres implique, indépendamment des questions de dispersion au départ du projectile et de dispersion due au vent, l'introduction de corrections de trajectoire du projectile pour tenir compte, en particulier, de l'effet de la pesanteur et du défilement de la cible. Pour des raisons d'ergonomie et de masse, il est exclu d'obtenir, à la bouche de l'arme, des vitesses suffisamment élevées pour parcourir les trajets nécessaires en un temps de l'ordre de la seconde.
Deux modes de correction sont possibles :

- une correction de guidage en boucle ouverte, qui revient d'une part à corriger la pesanteur et d'autre part à mesurer le mouvement de défilement de la cible avant de tirer et d'en déduire un "programme" de correction, qui doit être élaboré et affiché dans l'arme avant le tir. De telle procédure implique, dans la séquence de tir, de mesurer les caractéristiques du mouvement de la cible et d'admettre que, pendant la durée de vol du projectile, ces caractéristiques ne vont pas varier de façon significative ;
- une correction en boucle fermée où le système tend à annuler l'écart du missile par rapport à l'axe poste de tir-cible jusqu'à la fin du vol.

La correction de guidage en boucle ouverte exige que la durée de vol soit faible, puisqu'on extrapole le mouvement de la cible, et implique, entre autres, pour le projectile, une vitesse initiale importante pour s'affranchir le mieux possible des effets du vent.

La correction de guidage en boucle fermée est seule compatible avec un projectile animé d'une faible vitesse initiale.

On a couramment recours à une vitesse initiale importante pour obtenir une manoeuvrabilité aérodynamique suffisante du missile à la sortie du tube. Quel que soit d'ailleurs le système de lancement (générateur de gaz, accélérateur, etc....), cette solution exige une charge de poudre importante, apportant des contraintes de poids, d'encombrement, d'effet de souffle, de flamme, de bruit, d'émanation de gaz, incompatibles avec le tir en ambiance confinée et la discrétion de tir.

L'aptitude au tir en ambiance confinée demande l'utilisation au départ d'une faible charge de poudre. Les dispositifs correspondants peuvent être de types bien connus, tels que accélérateurs à fusée, systèmes d'éjection du genre canon ou canon sans recul à très faible vitesse d'éjection, etc...

Le tireur y gagne en confort car le bruit est nettement atténué, la discrétion au départ du coup assurée et la réaction de l'arme sur le tireur peut être quasi nul-le ; en revanche, le missile sort de l'arme à faible vitesse. Il en résulte que le pilotage aérodynamique classique par prise d'incidence engendrant des couples est inopérant, les forces aérodynamiques étant trop faibles. Seul le pilotage en force, c'est-à-dire au moyen de forces de manoeuvre passant par le centre de gravité, permet, dès le départ du coup, d'assurer une bonne manoeuvrabilité et un temps de réponse rapide du missile alors capable de contrer les effets de la pesanteur, ceux du vent et d'attaquer les objectifs évoluant à faible distance. Avec un tel pilotage en force, il n'y a pas ou peu de prise d'incidence aérodynamique, mais déplacement direct du centre de gravité.

Dans le cas d'un projectile à faible vitesse, de telles forces de manoeuvre ne peuvent être que d'origine propulsive. Comme le maintien du pilotage en force nécessite le maintien de l'application des forces de manoeuvre sur le centre de gravité du projectile, il en résulte que la consommation de poudre propulsive engendrant ces forces est importante, ce qui pénalise la masse de l'arme. De plus, les réglages de centrage sont délicats à obtenir, puisque la force de manoeuvre doit passer avec précision par le centre de gravité d'ensemble pendant le vol.

La présente invention a pour objet de remédier à cet inconvénient. Elle permet d'obtenir un système d'arme léger, dont les missiles à faible vitesse peuvent être parfaitement guidés sans nécessiter de réglages délicats.

A cette fin, selon l'invention, le missile pourvu d'em-pennages et destiné à être lancé à partir d'un tube et comprenant une charge militaire disposée dans la partie arrière dudit missile, un propulseur de vol monté dans la partie avant du missile et alimentant des tuyères latérales pour communiquer audit missile une poussée axiale, est caractérisé en ce que :
- ledit propulseur de vol et lesdites tuyères latérales sont agencés pour communiquer audit missile des force de manoeuvres pour le pilotage en force, en plus de ladite poussée axiale ;
- il est prévu au moins un accélérateur intégré, dont la combustion est terminée avant que ledit missile sorte dudit tube et qui est capable de communiquer audit missile, à la sortie du tube, une faible vitesse initiale ;
- et ladite charge militaire, ledit accélératteur intégré et ledit propulseur de vol sont agencés dans le missile de façon que :
    a) lorsque le missile sort du tube après combustion du-dit accélérateur intégré, le centre de gravité du missile est disposé dans un plan transversal à l'axe longitudinal du missile et passant par lesdites forces de manoeuvre ; et
    b) pendant le vol du missile et la combustion progressive dudit propulseur de vol, le centre de gravité du missile recule le long de l'axe longitudinal du missile, permettant ainsi la génération de couples aérodynamiques produisant des forces de manoeuvre s'ajoutant à celles du pilotage en force.

Ainsi, dans le missile conforme à la présente invention, on met en oeuvre une association du pilotage en force du missile dès sa sortie du tube de lancement avec un agencement particulier du propulseur de vol dans ledit missile permettant d'obtenir un pilotage en force pur au départ du missile, efficace à faible vitesse initiale, puis par une évolution du centre de gravité, un un pilotage mixte (combinaison du pilotage en force et du pilotage aérodynamique) quand la vitesse de vol s'est accrue suffisamment.

Le missile est éjecté hors de son tube par l'accélérateur intégré qui communique au missile une accélération longitudinale et assure éventuellement la mise en rotation du missile, ceci sans réaction appréciable sur le poste de tir. La combustion de la charge ou des accélérateurs est complète à l'intérieur du tube de lancement et le missile sort dudit tube de lancement avec une vitesse longitudinale de l'ordre de 20m/s et une éventuelle vitesse d'autorotation d'environ 5 tours par seconde.

Les tuyères du propulseur de vol sont allumées après que le missile soit sorti du tube. Leur disposition latérale dégage l'arrière du missile, alors plus discret en vol, et facilite les liaisons infrarouges, électromagnétiques, etc... éventuellement nécessaires entre le poste de tir et ledit missile. Les tuyères font un angle par rapport à l'axe du missile afin que leur poussée suivant l'axe de celle-ci ait une composante axiale contribuant à la poussée longitudinale. Les gouvernes sont constituées de dispositifs connus susceptibles de dévier le jet propulsif tel que tuyères mobiles, déviateurs, intercepteurs de jet, etc... par exemple des types mentionnés dans les brevets FR-A1 099 901, FR-A1 602 885 et GB-A-1 185 193. Un autre dispositif connu, de complexité intermédiaire, fait appel à une jupe mobile en sortie de tuyère. La déviation du jet provoque la déviation du vecteur poussée lié à la tuyère et contribue a la force de manoeuvre. L'amplitude des déviations par dispositifs simples est relativement faible et la force de manoeuvre est faible par rapport à la composante axiale de la poussée.

La force de manoeuvre, au départ du missile, doit contrer la pesanteur et permettre une bonne manoeuvrabilité de celui-ci, ce qui conduit à un facteur de charge transversal de l'ordre de 2 et implique pour le propulseur de vol une importante composante axiale de la poussée. Le missile est continûment accéléré.

La vitesse du missile croît le long de l'ensemble de la trajectoire depuis environ 20m/s en sortie de tube, jusqu'à une valeur subsonique élevée en fin de vol. Des stabilisateurs placés à l'arrière du missile et déployables en sortie de tube assurent la stabilité aérodynamique même à faible vitesse, puis contribuent à la portance dans la phase du pilotage mixte.

La loi de poussée des propulseurs peut être programmée en fonction du temps de vol par la définition du profil de combustion de la charge propulsive ou de la nature de la poudre (bloc bicomposition, par exemple). Ainsi, une plus grande surface de combustion de cette charge au début du vol peut donner au missile une disponibilité en facteur de charge plus grande lui permettant de compenser, dès la sortie du tube, la pesanteur, l'action du vent et de prendre à partie des cibles mobiles évoluant à courte portée.

L'optimisation de la loi de combustion pour le reste du vol permet de définir une masse minimale pour la charge propulsive.

On remarquera qu'un missile conforme au préambule de la revendication 1 est décrit par le brevet US-A-4 519 315. Par ailleurs, les documents FR-A-1 194 102 et US-A-2 503 271 montrent que le système propulseur peut fournir à un missile à la fois la poussée propulsive axiale et des forces de manoeuvre de pilotage en force. Le document FR-A-2 492 966 montre l'utilisation d'empennages.

Selon l'invention, on met à profit le fait que le centre de gravité peut évoluer au cours du vol, à partir de la position imposée au départ. On prend des dispositions particulières concernant l'installation des différents sous-ensembles constituant le missile, de telle sorte que cette évolution du centre de gravité, induisant des forces aérodynamiques, se fasse dans un sens permettant les performances recherchées.

En particulier, on peut disposer une charge militaire auxiliaire à l'avant du missile. On remarquera que le document EP-A1 -0201 433 montre la subdivision de la charge militaire en une charge avant et une charge arrière.

Dans le missile de l'invention, la disposition des propulseurs et de la charge militaire fait en sorte que le centre de gravité du missile recule pendant le vol (délestage) produisant ainsi l'effet de pilotage mixte. En même temps, cette disposition est particulièrement favorable à l'action de la charge creuse (simple ou multiple) équipant le missile, notamment par l'augmentation de la distance d'attaque (distance de la charge au blindage au moment de la détonation).

De préférence, la charge militaire arrière se trouve juste devant l'accélérateur intégré et l'éventuelle charge auxiliaire se trouve juste devant le propulseur de vol.

Avantageusement, lesdits empennages sont repliables, lorsque ledit missile se trouve dans ledit tube de lancement.

Il est avantageux que le propulseur de vol brûle symétriquement par rapport à l'axe longitudinal du missile. Le missile peut être stabilisé en roulis et comporter au moins quatre tuyères latérales de pilotage en force.

Le missile peut, en variante, être entraîné en autorotation autour de son axe longitudinl et comporter seulement deux tuyères latérales de pilotage en force.

L'invention concerne également un système d'arme, caractérisé en ce qu'il comporte un missile tel que spé-cifié sous l'une quelconque des revendications 1 à 7 et un tube pour le lancement dudit missile.

L'invention est expliquée ci-après au moyen de la description donnée à titre non limitatif et à l'appui des dessins annexés. Cette description concerne un système d'arme de lutte antichars à courte portée.

Sur ces dessins :

La figure 1 représente une vue schématique en coupe axiale d'un système d'arme selon l'invention comportant un missile dans son tube de lancement, ce système utilisant un pilotage en force pur au départ, mais présentant une loi de délestage liée à la disparition des produits consommables augmentant, de par les effets aérodynamiques, la manoeuvrabilité du missile en fin de vol.

La figure 2 montre, à titre de comparaison, une vue schématique semblable d'un missile dans son tube de lancement utiilisant un pilotage en force pur durant tout le vol, le centre de gravité du missile restant fixe.

La figure 3 montre, également à titre de comparaison, une vue schématique semblable pour un missile utilisant un pilotage en force pur au départ, mais dont la loi de délestage liée à la disparition des produits consommables introduit finalement une réduction de la manoeuvrabilité en fin de vol.

La figure 4 représente des courbes caractérisant les lois de variation de position du centre de gravité durant le vol du missile, respectivement pour les types de missiles précités, montrés pr les figures 1,2 et 3 et dont la silhouette est schématiquement rappelée. Ces courbes sont données pour permettre une comparaison qualitative, et non pas quantitative.

La figure 5 représente des courbes illustrant l'évolution de la manoeuvrabilité dans le temps respectivement pour les missiles des figures 1,2 et 3 et dont la silhouette est rappelée par des schémas. Ces courbes sont données pour permettre une comparaison qualitative et non quantitative.

La figure 6 représente les courbes d'évolution de la vitesse et de la distance parcourue en fonction du temps, pour le missile de la figure 1.

La figure 7a représente, pour une charge militaire du type charge creuse, l'influence de la distance d'action (a) sur l'efficacité caractérisée par la pénétration obtenue (b) dans une plaque d'acier semi-infinie, tandis que la figure 7b met en évidence les caractéristiques respectives de pénétration pour des missiles selon les figures 1 et 3.

Les figures 8a et 8b représentent schématiquement, en l'absence d'ordre de pilotage, la décomposition des vecteurs poussée des tuyères du missile de la figure 1, respectivement en vue de l'arrière et du dessus.

Les figures 9a,9b et 9c représentent schématiquement , en présence d'un ordre de pilotage, la décomposition des vecteurs poussée des tuyères du missile de la figure 1, respectivement en vue de l'arrière, du dessus et de côté.

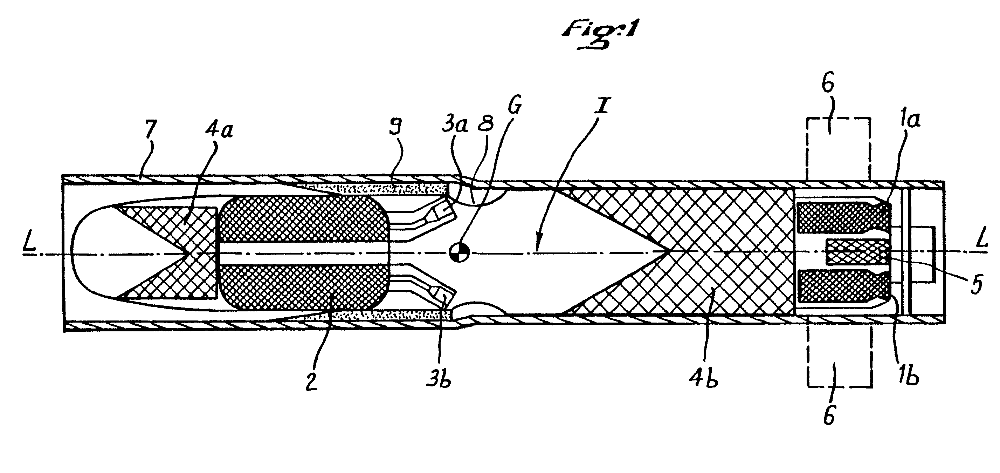

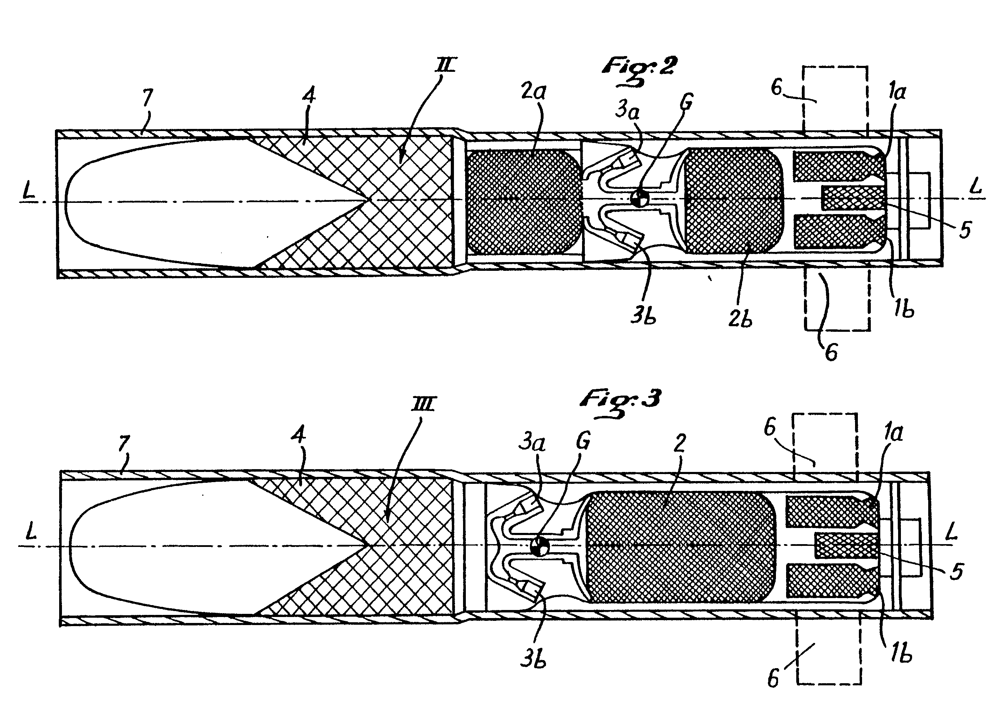

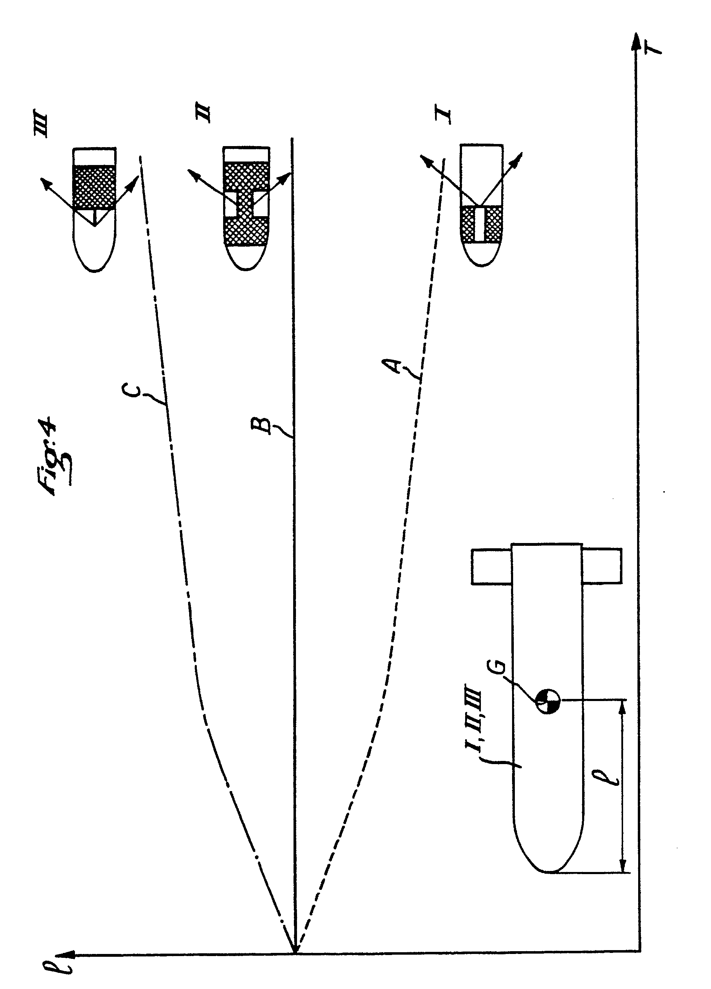

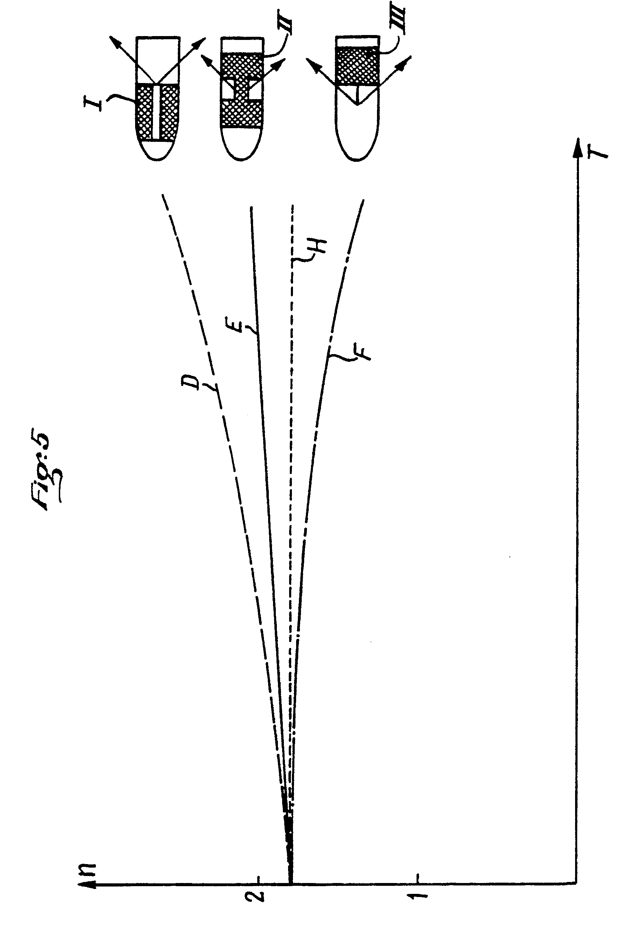

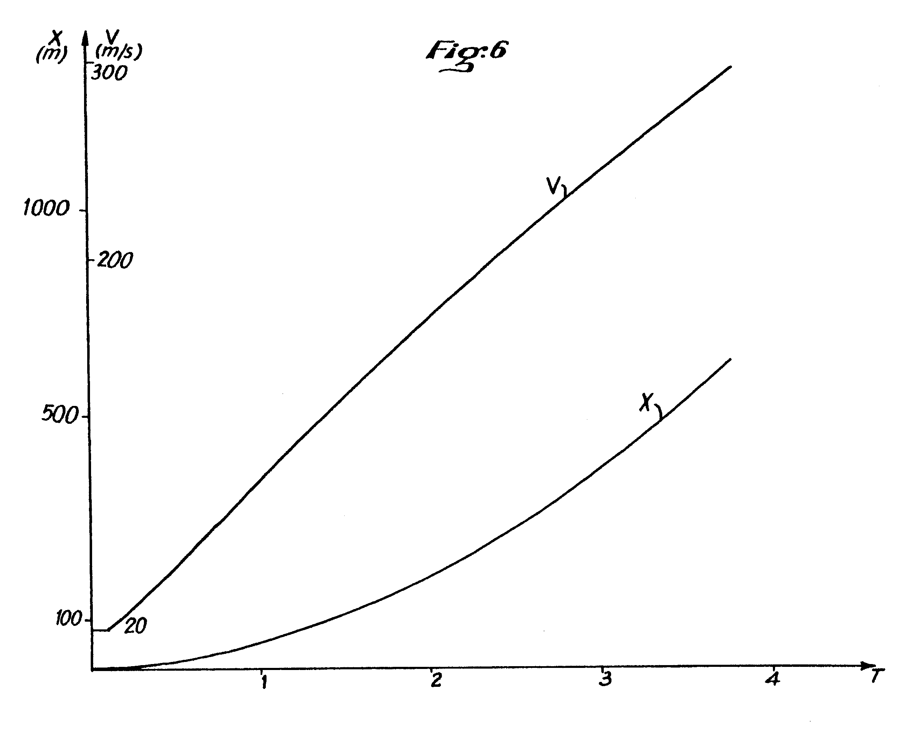

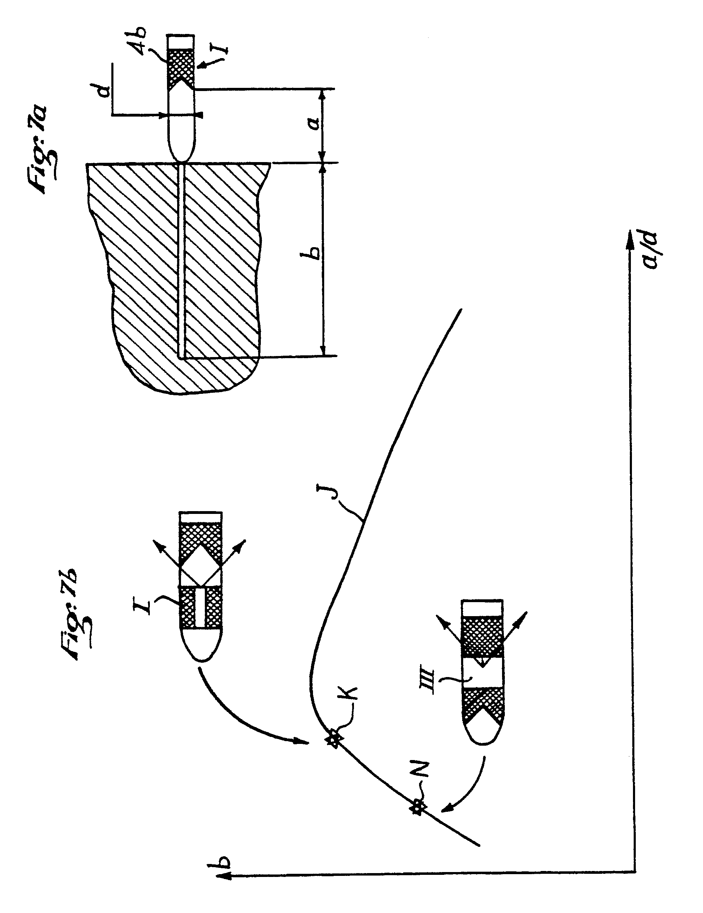

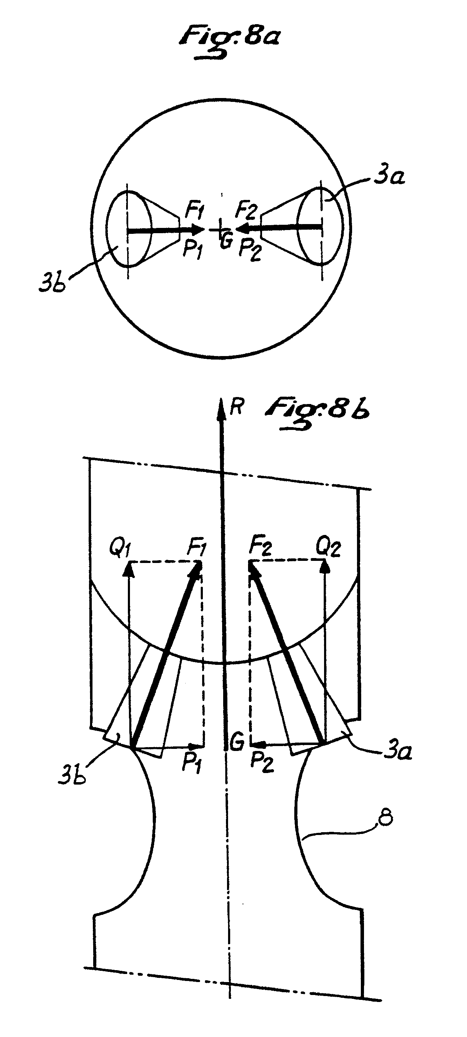

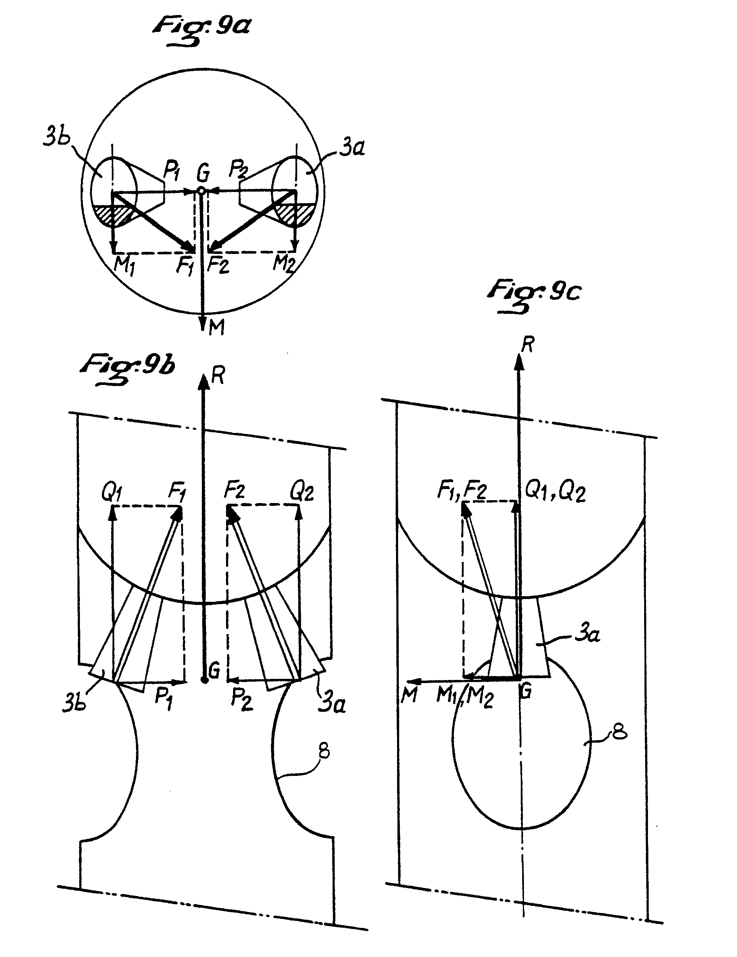

Les missiles antichars I, II et III des figures 1, 2 et 3 comportent :

a) deux accélérateurs 1a et 1b disposés à l'arrière et destinés à communiquer aux missiles une vitesse à la sortie du tube de lancement 7 de par exemple 20 m/s. Les accélérateurs 1a et 1b sont du type à charge combustile et la combustion de cette charge propulsive s'effectue entièrement à l'intérieur du tube de lancement 7, afin de ne pas gêner le tireur. Un tel faible gain de vitesse est acquis par la combustion d'une masse de poudre également faible, compatible avec le tir en ambiance confinée ;

b) un propulseur de vol 2, allumé quelques mètres après la sortie du tube 7, pour ne pas gêner le tireur et être alors en dehors de l'espace confiné. Ce propulseur 2 comporte deux tuyères 3a et 3b identiques, fixes coplanaires et symétriques par rapport à l'axe longitudinal L-L des missiles. Les axes desdites tuyères 3a et 3b concourent sur l'axe longitudinal du missile correspondant et sont inclinés symétriquement sur cet axe. En l'absence de tout ordre de pilotage (voir les figures 8a et 8b) :

- la composante axiale R = $Q_1$ + $Q_z$ des poussées $F_1$ et $F_2$ des deux tuyères 3a et 3b permet le vol du missile ;
- l'effet sur le missile des composantes $P_1$ et $P_2$ des poussées $F_1$ et $F_2$ des tuyères 3a et 3b, dans le plan des tuyères, est nul par symétrie.

En regard de chacune des tuyères 3a et 3b, la peau du missile comporte une ouverture 8 pour le passage des gaz.

Chaque tuyère 3a ou 3b est munie d'un système d'interception ou de déviation de jet (connu et non représenté) qui permet, sur un ordre de pilotage, de dévier simultanément et dans le même sens, les jets des deux tuyères 3a et 3b engendrant ainsi une composante transversale de poussée M = $M_1$ + $M_2$ , orthogonale au plan des deux tuyères 3a et 3b (voir les figures 9a, 9b et 9c) . Cette composante transversale de poussée M permet la manoeuvre du missile ;

c) une charge militaire 4, du type charge creuse ;

d) un block d'équipement 5, disposé dans la partie arriére du missile et comportant les moyens nécessaires au guidage et au pilotage de celui-ci ;

e) des empennages repliables 6 qui assurent la stabilité aérodynamique ;

f) un tube de stockage 7, qui sert de rampe de lancement.

Lorsque le missile I, II ou III sort du tube 7 sous l'action des deux propulseurs 1a et 1b , la combustion de ceux-ci est terminée et le centre de gravité G du missile se trouve alors dans le plan contenant la composante transversale M de la poussée du propulseur de croisière 2. Le missile est alors piloté uniquement en force.

Dans le cas du missile II de la figure 2, la charge 4 se trouve à l'avant et le propulseur principal 2 est subdivisé en deux propulseurs 2a et 2b , disposés de part et d'autre du centre de gravité G et se consommant de façon identique, de sorte que pendant la durée du vol le centre de gravité G reste fixe. Ceci est illustré par le schéma B de la figure 4, sur laquelle on a représenté les variations de la distance 1 séparant l'avant du missile I, II ou III de son centre de gravité G, en fonction du temps T (sur la figure 4, on a supposé l'axe des temps orienté de la droite vers la gauche).

Dans le missile III de la figure 3, la charge 4 se trouve à l'avant comme dans la figure 2 mais le propulseur 2 est unitaire et opposé de la charge 4 par rapport au centre de gravité G. Aussi, au fur et à mesure que la charge du propulseur 2 se consume, le centre de gravité G se déplace vers l'avant du missile III, la distance 1 diminuant. Ceci est illustré par la courbe C de la figure 4.

En revanche, dans le missile I conforme à l'invention (voir figure 1), le propulseur de vol 2 se trouve à l'avant tandis que la charge 4 est subdivisée en une charge principale 4b disposée à l'arrière et une charge auxiliaire 4a (pouvant ne pas exister) disposée à l'avant. Il en résulte que, au fur et à mesure de la combustion de la poudre du propulseur de vol 2, le centre de gravité G du missile I recule (délestage), la vitesse axiale augmente et à chaque ordre de manoeuvre commandé la composante transversale M de la poussée du propulseur 2 crée un couple qui engrendre une incidence, donc une portance. La composante transversale M et la portance ainsi créées produisent chacune des effets de manoeuvre qui s'ajoutent. Sur la figure 4, la courbe A illustre l'augmentation de la distance 1 avec la durée de vol.

Sur la figure 5, on a illustré par les courbes D, E et F la manoeuvrabilité des missiles I,II,III en fonction du temps de vol. Pour cela on a porté en ordonnées le facteur de charge n et en abscisses le temps T. Cette figure montre que la manoeuvrabilité du missile selon l'invention subit une augmentation avec le temps, alors que le missile III de la figure 3 devient de moins en moins bien manoeuvrable. Pour le missile II de la figure 2, on obtient une légère augmentation de manoeuvrabilité due au délestage en charge propulsive (la droite H représente le cas fictif d'un délestage nul). La figure 6 montre la vitesse V (en m/s) du missile I et la distance X (en m) parcourue par celui-ci en fonction du temps T (en s).

On remarquera que la division d'une charge militaire de type charge creuse en deux éléments dont l'un 4a est à l'avant du propulseur et l'autre 4b à l'arrière de celui-ci est avantageuse. En effet, cette disposition permet, pour une même longueur de missile d'avoir une distance d'action (distance a entre la charge et le blindage au moment de la détonation) de la charge principale arrière 4b, nettement plus grande que dans une conception classique avec charge principale à l'avant (voir les figures 2 et 3) ce qui est très favorable à l'efficacité de la charge, c'est-à-dire à la pénétration b dans une plaque de blindage (voir la figure 7a. La courbe J de la figure 7b montre que la distance de pénétration b passe par un maximum en fonction du rapport $\frac{a}{d}$ où $\frac{a}{d}$ est la distance d'action définie ci-dessus et d le diamètre du missile (figure 7a). Sur la courbe J, le missile I selon l'invention correspond à un point K plus avantageux que le point N correspondant au missile III de la figure 3.

Ci-dessus, on a décrit un exemple de missile entraîné en autorotation autour de son axe L-L, de sorte que deux tuyères de pilotage en force sont suffisantes. Si le missile était stabilisé en roulis, il devrait comporter au moins quatre moyens latéraux de pilotage en force.

Comme on peut le voir sur la figure 1, le tube 7 peut présenter vers l'avant un diamètre supérieur à celui de sa partie arrière et la partie avant du missile, également de plus faible diamètre que la partie arrière de celui-ci, est maintenue par une cale annulaire 9.

## Revendications

1. Missile (I) pourvu d'empennages (6) et destiné à être lancé à partir d'un tube (7) et comprenant une charge militaire (4b) disposée dans la partie arrière dudit missile, un propulseur de vol (2) monté dans la partie avant du missile et alimentant des tuyères latérales (3a, 3b) pour communiquer audit missile une poussée axiale (R),
caractérisé en ce que :
- ledit propulseur de vol (2) et lesdites tuyères latérales (3a, 3b) sont agencés pour communiquer audit missile des forces de manoeuvre (M) pour le pilotage en force, en plus de ladite poussée axiale (R) ;
- il est prévu au moins un accélérateur intégré (1a, 1b), dont la combustion est terminée avant que ledit missile (I) sorte dudit tube (7) et qui est capable de communiquer audit missile (I), à la sortie du tube (7), une faible vitesse initiale ;
- et ladite charge militaire, ledit accélérateur integré et ledit propulseur de vol sont agencés dans le missile de façon que :
  a) lorsque le missile sort du tube après combustion dudit accélérateur intégré, le centre de gravité (G) du missile est disposé dans un plan transversal à l'axe longitudinal (L-L) du missile et passant par lesdites forces de manoeuvre ; et
  b) pendant le vol du missile et la combustion progressive dudit propulseur de vol, le centre de gravité du missile recule le long de l'axe longitudinal (L-L) du missile, permettant ainsi la génération de couples aérodynamiques produisant des forces de manoeuvre s'ajoutant à celles du pilotage en force.

2. Missile selon la revendication 1,
caractérisé en ce qu'une charge militaire auxiliaire (4a) est disposée à l'avant du missile.

3. Missile selon la revendication 2,
caractérisé en ce que la charge militaire arrière (4b) se trouve juste devant l'accélérateur intégré (1a,1b) et en ce que l'éventuelle charge auxiliaire (4a) se trouve juste devant le propulseur de vol (2).

4. Missile selon l'une quelconque des revendications 1 à 3,
caractérisé en ce que lesdits empennages (6) sont repliables, lorsque ledit missile se trouve dans ledit tube de lancement (7).

5. Missile selon la revendication 1,
caractérisé en ce que le propulseur de vol (2) brûle symétriquement par rapport à l'axe longitudinal du missile.

6. Missile selon la revendication 1,
caractérisé en ce que le missile est stabilisé en roulis et comporte au moins quatre tuyères latérales de pilotage en force.

7. Missile selon la revendication 1,
caractérisé en ce que le missile est entraîné en autorotation autour de son axe longitudinal (L-L) et comporte seulement deux tuyères latérales (3a,3b) de pilotage en foce.

8. Système d'arme,
caractérisé en ce qu'il comporte un missile tel que spécifié sous l'une quelconque des revendications 1 à 7 et un tube pour le lancement dudit missile.

## Claims

1. Missile (I) provided with fins (6) and intended to be launched from a tube (7) and comprising a combat payload (4b) disposed in the rear of the missile, a flight propulsion unit (2) mounted in the front of the missile and feeding lateral jets (3a,3b) to impart to the missile an axial thrust (R),
characterized in that :
- said flight propulsion unit (2) and said lateral jets (3a,3b) are arranged for imparting to said missile maneuver forces (M) for steering by force, in addition to said axial thrust (R) ;
- at least one integrated booster (1a,1b) is provided, the combustion of which is terminated before the missile (I) leaves said tube (7) and which is capable of imparting to said missile (I) a low initial speed when it leaves the tube (7) ;
- and said combat payload, said integrated booster and said flight propulsion unit are arranged in the missile in such a way that :
  a) when the missile leaves the tube after combustion of said integrated booster, the center of gravity (G) of the missile is located in a plane transverse to the longitudinal axis (L-L) of the missile and passing through said maneuver forces ; and
b) during the flight of the missile and the progressive combustion of the flight propulsion unit, the center of gravity of the missile moves back along the longitudinal axis (L-L) of the missile, making it possible for aerodynamic torques to develop which produce maneuver forces which are added to those of the steering by force.

2. Missile according to claim 1,
characterized in that an auxiliary combat payload (4a) is located in the front of the missile.

3. Missile according to claim 2,
characterized in that the rear combat payload (4b) is located just in front of the integrated booster (1a,1b) and in that the possible auxiliary payload (4a) is located just in front of the flight propulsion unit (2).

4. Missile according to any one of claims 1 to 3,
characterized in that said fins (6) are foldable when said missile is in said launching tube (7).

5. Missile according to claim 1,
characterized in that the flight propulsion unit (2) burns symetrically with respect to the longitudinal axis of the missile.

6. Missile according to claim 1,
characterized in that the missile is stabilized in terms of roll and comprises at least four lateral jets of steering by force.

7. Missile according to claim 1,
characterized in that the missile is brought into autorotation around its longitudinal axis (L-L) and comprises only two lateral jets (3a,3b) of steering by force.

8. weapon system,
characterized in that it comprises a missile such as specified under any one of claims 1 to 7 and a tube for launching the missile.

**Ansprüche**

1. Flugkörper (1) mit Leitwerk (6) zum Feuern aus einem Rohr (7) und bestehend aus einer im hinteren Teil des Flugkörpers angeordneten militärischen Ladung (4b), einem im vorderen Teil des Flugkörpers eingesetzten Flugtriebwerk (2), das die Seitendüsen (3a, 3b) speist, um dem Flugkörper einen axialen Schub (R)

zu erteilen, dadurch **gekennzeichnet**, daß
- das Flugtriebwerk (2) und die Seitendüsen (3a, 3b) eingerichtet sind, dem Flugkörper zur Kraft-Fluglagenregelung zusätzlich zum Axialschub (R) Manövrierkräfte (M) zu erteilen,
- zumindest ein integrierter Beschleuniger (1a, 1b) vorgesehen ist, dessen Verbrennung beendet ist, bevor der Flugkörper (1) aus dem Rohr (7) austritt, und der in der Lage ist, dem Flugkörper (1) beim Austritt aus dem Rohr (7) eine schwache Initialgeschwindigkeit zu erteilen, und daß
- die militärische Ladung, der integrierte Beschleuniger und das Flugtriebwerk im Flugkörper derart eingerichtet sind, daß
 a) beim Austreten des Flugkörpers aus dem Rohr und nach dem Brennen des integrierten Beschleunigers der Schwerpunkt (G) des Flugkörpers in einer zur Längache (L-L) des Flugkörpers transversalen und die Manövrierkräfte durchlaufenden Ebene liegt und
 b) während des Fluges des Flugkörpers und der fortschreitenden Verbrennung des Flugtriebwerks der Schwerpunkt des Flugkörpers sich längs der Längsachse (L-L) des Flugkörpers zurückverlegt, wodurch aerodynamische Momente erzeugt werden können, durch die Manövrierkräfte entstehen, die sich zu denen der Kraft-Fluglagenregelung hinzufügen.

2. Flugkörper nach Anspruch 1, dadurch **gekennzeichnet**, daß im vorderen Teil des Flugkörpers eine zusätzliche militärische Ladung (4a) angeordnet ist.

3. Flugkörper nach Anspruch 2, dadurch **gekennzeichnet**, daß sich die hintere militärische Ladung (4b) genau vor dem integrierten Beschleuniger (1a, 1b) befindet und daß sich die mögliche zusätzliche Ladung (4a) genau vor dem Flugtriebwerk (2) befindet.

4. Flugkörper nach einem der vorhergehenden Ansprüche 1 bis 3, dadurch **gekennzeichnet,** daß die Leitwerke (6) einziehbar sind, wenn der Flugkörper sich im Austrittsrohr (7) befindet.

5. Flugkörper nach Anspruch 1, dadurch **gekennzeichnet**, daß das Flugtriebwerk (2) der Längsachse des Flugkörpers gegenüber symmetrisch brennt.

6. Flugkörper nach Anspruch 1, dadurch **gekennzeichnet**, daß der Flugkörper rollbewegungsstabilisiert ist und für die Kraft-Fluglagenregelung zumindest vier Seitendüsen aufweist.

7. Flugkörper nach AnsPruch 1, dadurch **gekennzeichnet**, daß der Flugkörper um seine Längsachse (L-L ) in Autorotation versetzt wird und für die Kraft-Fluglagenregelung nur zwei Seitendüsen (3a, 3b) besitzt.

8. Waffensystem, dadurch **gekennzeichnet**, daß es einen Flugkörper nach den Kennzeichen der vorhergehenden Ansprüche 1 bis 7 und ein Rohr für das Abfeuern des Flugkörpers aufweist.

EP 0 245 565 B1

*Fig:1*

*Fig. 2*

*Fig. 3*

EP 0 245 565 B1

Fig. 4

EP 0 245 565 B1

Fig: 5

EP 0 245 565 B1

Fig:6

*Fig: 7b*

*Fig: 7a*

I

J

K

N

III

b

a/d

d

4b

b

a

I

EP 0 245 565 B1

*Fig.8a*

*Fig.8b*

Fig. 9a

Fig. 9b

Fig. 9c